# EUROPÄISCHE PATENTANMELDUNG

(11) **EP 0 707 931 A2**
(43) Veröffentlichungstag der Anmeldung: **24.04.1996**
(21) Anmeldenummer: 95112996.4
(22) Anmeldetag: 18.08.1995
(51) Int. Cl.: B28C 7/06

(54) **Vorrichtung zur pneumatischen Förderung von trockenem Fördergut**

(30) Priorität: 18.10.1994 DE 4437107; 10.06.1995 DE 29509569 U
(71) Anmelder: PUTZMEISTER-WERK MASCHINENFABRIK GMBH, D-72631 Aichtal (DE)
(72) Erfinder: Kümmerle, Klaus, D-72631 Aichtal (DE); Brack, Peter, D-72525 Rietheim (DE); Neuburger, Bruno, D-70178 Stuttgart (DE)
(74) Vertreter: Wolf, Eckhard, Dr.-Ing.

(57) **Zusammenfassung**

Die Erfindung bezieht sich auf einen pneumatischen Trockenmörtelförderer zur kontinuierlichen Mörtelversorgung von Mischpumpen oder Putzmaschinen an Baustellen. Der Trockenmörtelförderer (1) besteht im wesentlichen aus einem an einen Vorratsbehälter (70) anschließbaren Beschickungsbehälter (14) mit einer Auflockerungszone (64) für das Fördergut sowie einer mit dem aufgelockerten Fördergut beschickbaren und mit Druckluft beaufschlagbaren, gegenüber den Vorrats- und Beschickungsbehältern (14,70) abgedichteten, über eine Förderleitung (60) mit einem Abscheidebehälter (80) für das Fördergut verbindbaren Injektionszone (30). Um einen kontinuierlichen und entmischungsfreien Transport von Trockenmörtelgemischen mit Bestandteilen unterschiedlicher Körnung und verschiedenen Schüttgewichts zu ermöglichen, wird gemäß der Erfindung vorgeschlagen, daß in den Beschickungsbehälter (14) eine kontinuierlich arbeitende Dosierschnecke (36) einer an den Beschickungsbehälter angeschlossenen Dosier- und Dichtstrecke (16) eingreift und daß die Dosier- und Dichtstrecke (16) austrittsseitig von einer mit Druckluft beaufschlagten, in die als in Richtung Auslaßöffnung (58) konisch verjüngter Rohrabschnitt (30) ausgebildete Injektionszone mündenden Ringdüse (40) umschlossen ist, und daß das Dosierrohr 16 unter Bildung eines an seinem einen Ende mit der Druckluft beaufschlagbaren und an seinem anderen Ende die Ringdüse 40 bildenden Ringkanals 38 doppelwandig ausgebildet ist.

## Beschreibung

Die Erfindung betrifft eine Vorrichtung zur pneumatischen Förderung von pulverförmigem und/oder körnigem trockenem Fördergut mit einem Vorratsbehälter, einem dem Vorratsbehälter drucklos nachgeordneten, eine Auflockerungszone für das Fördergut enthaltenden Beschickungsbehälter, einem an den Beschickungsbehälter angeschlossenen Dosierrohr, einer motorisch angetriebenen, in den Beschickungsbehälter eingreifenden und mit mehreren Windungen durch das Dosierrohr hindurchgreifenden Dosierschnecke, einem austrittsseitig an das Dosierrohr angeschlossenen, über eine Ringdüse mit Druckluft beaufschlagbaren, gegenüber dem Beschickungsbehälter über das Dosierrohr abgedichteten, über eine Auslaßöffnung und eine an diese angeschlossene Förderleitung mit einem Abscheidebehälter für das Fördergut verbindbaren, konisch in Richtung Auslaßöffnung verjüngten Injektorrohr.

Fördervorrichtungen dieser Art sind vor allem für den pneumatischen Transport von Trockenmörtel zu einer Mischpumpe oder einer Putzmaschine bestimmt. Ein fördertechnisches Problem liegt darin, daß Materialien mit unterschiedlichen Bestandteilen, Körnungen und Schüttgewichten in ihrem Fließverhalten sehr unterschiedlich sein können. Der Auflockerung des Materials und der entmischungsfreien Mitnahme durch die Förderluft kommt daher eine wesentliche Bedeutung zu.

Es ist bereits vorgeschlagen worden, das Fördergut chargenweise in ein die Auflockerungszone bildendes Fördergefäß einzufüllen, das gegenüber dem Vorratsbehälter durch eine Klappe abgedichtet werden kann. Das Fördergut wird über eine in das Fördergefäß eintauchende Förderdüse mit Druckluft beaufschlagt und dabei aufgelockert und mit der abströmenden Druckluft in die Injektionszone mitgenommen. Da das Material beim Auflockerungs- und Mitnahmevorgang in seiner Fließrichtung umgelenkt wird, kann es beim Vorhandensein unterschiedlicher Mischungsbestandteile im Fördergut zu Entmischungserscheinungen kommen, die zu Verstopfungen Anlaß geben können. Weiter wird für spezielle Anwendungsfälle der chargenweise Betrieb der bekannten Fördervorrichtung als nachteilig empfunden.

Ausgehend hiervon liegt der Erfindung die Aufgabe zugrunde, eine pneumatische Fördervorrichtung für trockenes Fördergut der eingangs angegebenen Art zu entwickeln, die kontinuierlich betrieben werden kann und bei der auch Trockengemische aus Bestandteilen mit sehr unterschiedlichen Korngrößen und Schüttgewichten entmischungsfrei gefördert werden können.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Erfindungsgemäß ist das Dosierrohr unter Bildung eines an seinem einen Ende mit der Druckluft beaufschlagbaren und an seinem anderen Ende die Ringdüse bildenden Ringkanals doppelwandig ausgebildet. Entlang dem Ringkanal tritt eine Beruhigung einer gegebenenfalls unter Drall in den Ringkanal eintretenden Druckluft ein, die das aus dem Dosierrohr austretende Fördergut über den gesamten Umfang schlauchartig erfaßt und entmischungsfrei in Förderrichtung auf Fördergeschwindigkeit beschleunigt. Es hat sich gezeigt, daß dadurch Entmischungserscheinungen zuverlässig vermieden werden können.

Eine bevorzugte Ausgestaltung der Erfindung sieht vor, daß eine vom Dosierrohr durchdrungene, über einen Luftanschluß mit der Druckluft beaufschlagbare umlaufende Luftverteilerkammer und ein das Dosierrohr konzentrisch umhüllendes, an seinem einen Ende zum Luftverteiler hin offenes, den Ringkanal außenseitig begrenzendes Hüllrohr vorgesehen ist. Das Injektorrohr ist dabei zweckmäßig fluchtend an das Hüllrohr angeschlossen, während die Luftverteilerkammer durch eine Trennwand gegenüber dem Beschickungsbehälter abgetrennt ist.

Zur Verbesserung der Abdichtung an der Dosier- und Dichtstrecke stehen gemäß der Erfindung verschiedene Möglichkeiten einzeln oder in Kombination zur Verfügung:
- Die Schneckenwindungen können auf einer Achswelle mit in Förderrichtung zunehmendem Durchmesser angeordnet werden.
- Die Schneckenwindungen können eine in Förderrichtung stufenweise oder kontinuierlich abnehmende Ganghöhe aufweisen.
- Es kann eine doppelgängige Dosierschnecke verwendet werden.
- Die Dosierschnecke und das Dosierrohr können einen in Förderrichtung abnehmenden Durchmesser aufweisen.
- Das Dosierrohr trägt innenseitig eine Elastomerschicht, während die Dosierschnecke an ihrem Außendurchmesser zumindest partiell gegen die Elastomerschicht dichtend anliegt oder in diese radial eindringt. Die Elastomerschicht sollte dabei eine Wandstärke aufweisen, die mindestens der Korngröße des zu transportierenden Materials entspricht. Die Wandstärke beträgt zweckmäßig 3 bis 10 mm.

Mit den vorstehenden Merkmalen wird durchweg eine Verdichtung des Förderguts entlang der Dosier- und Dichtstrecke erzielt, aufgrund der sich eine Abdichtung der Dichtspalte zwischen der Außenkante der Dosierschnecke und der Innenfläche des Dosierrohrs ergibt.

Um eine ausreichende Auflockerung des aus dem Vorratsbehälter kommenden Förderguts zu erzielen, kann der Beschickungsbehälter mit einem Rührwerk bestückt werden, das durch am Dosierorgan angeordnete, im wesentlichen radial über dessen Achswelle überstehende Rührflügel gebildet sein kann.

Eine besonders niedrige Bauhöhe der Fördervorrichtung wird erzielt, wenn das Dosierorgan den Beschickungsbehälter und das Dosierrohr im wesentlichen horizontal durchgreift. Das Dosierorgan kann sich dabei zwischen einem im Übergangsbereich zwischen Dosierrohr und Injektionszone zentral angeordneten Steckzapfen und einem in den Beschickungsbehälter eingreifenden, zusammen mit dem Antriebsmotor abziehbaren motorseitigen Kupplungsorgan erstrecken. Zu Reinigungs- und Wartungszwecken kann in diesem Falle das Dosierorgan nach Abnahme des Antriebsmotors und Entfernung des Kupplungsorgans vom Steckzapfen abgezogen und aus dem Dosierrohr und dem Beschickungsbehälter entnommen werden.

Eine weitere vorteilhafte Ausgestaltung der Erfindung sieht vor, daß der Beschickungsbehälter mit Anschlußadaptern für unterschiedliche Vorratsbehälter bestückt werden kann. Auf diese Weise ist es beispielsweise möglich, die Vorrichtung mit ihrem Beschickungsbehälter unmittelbar an einen an einem Traggestell mit nach unten weisender Auslaßöffnung aufgehängten Big-Bag anzuschließen. Um die Fördervorrichtung einfach zu den jeweiligen, an der Baustelle aufgestellten Vorratsbehältern transportieren zu können, ist es zweckmäßig, wenn der Beschickungsbehälter ein vorzugsweise einachsiges Fahrgestell aufweist und wenn am Dosierrohr ein zur Seite des Fahrgestells überstehendes Stützbein angeordnet ist, das eine stabile Aufstellung der Fördervorrichtung mit im wesentlichen horizontal ausgerichtetem Dosierrohr erlaubt.

Trockenförderer der genannten Art werden häufig mit anderen Geräten, wie Kompressoren und Putzmaschinen kombiniert und über eine gemeinsame Versorgungseinheit mit Druckluft und Antriebsenergie versorgt. Es hat sich daher als besonders vorteilhaft erwiesen, wenn bei einer derartigen Förder- und Mischanlage für pulverförmiges oder körniges Mischgut ein gemeinsames Fahrgestell vorgesehen ist, das sowohl zur Aufnahme einer beispielsweise als Diesel-, Hydro- oder Stromaggregat ausgebildeten Versorgungseinheit als auch eines den Beschickungsbehälter, die Dosier- und Dichtstrecke und die Injektionszone aufweisenden Trockenförderers als auch einer einen Vorratsbehälter und eine Mischstrecke aufweisenden Mischvorrichtung und einer gegebenenfalls mit dieser kombinierten Gemischpumpe aufweist, wobei der Trockenförderer und gegebenenfalls auch die Mischvorrichtung und die Gemischpumpe im Gebrauchszustand vom gemeinsamen Fahrgestell abnehmbar, im Abstand voneinander aufstellbar und über Förderleitungen und Versorgungsleitungen miteinander und gegebenenfalls mit einem Kompressor verbindbar sind.

Im folgenden wird die Erfindung anhand eines in der Zeichnung in schematischer Weise dargestellten Ausführungsbeispiels näher erläutert. Es zeigen
- Fig. 1a bis c: eine teilweise geschnittene Seitenansicht, eine Draufsicht und eine Stirnseitenansicht einer pneumatischen Fördervorrichtung für trockenes Fördergut;
- Fig. 1d: eine Darstellung entsprechend Fig. 1a für ein abgewandeltes Ausführungsbeispiel einer Fördervorrichtung, deren Dosierrohr eine Elastomerschicht trägt;
- Fig. 1e: einen vergrößerten Ausschnitt aus Fig. 1d;
- Fig. 2: eine Förder- und Mischanlage für Mörtel, bestehend aus einem Trockenmörtelförderer mit Vorratsbehälter, einer Mischvorrichtung und einer Gemischpumpe in teilweise geschnittener Seitenansicht;
- Fig. 3: ein gegenüber Fig. 2 abgewandeltes Ausführungsbeispiel einer Förder- und Mischanlage in einer Seitenansicht;
- Fig. 4a und b: eine Seitenansicht und eine Draufsicht eines gemeinsamen Fahrgestells für einen Trockenförderer, eine Mischpumpe und einen Kompressor.

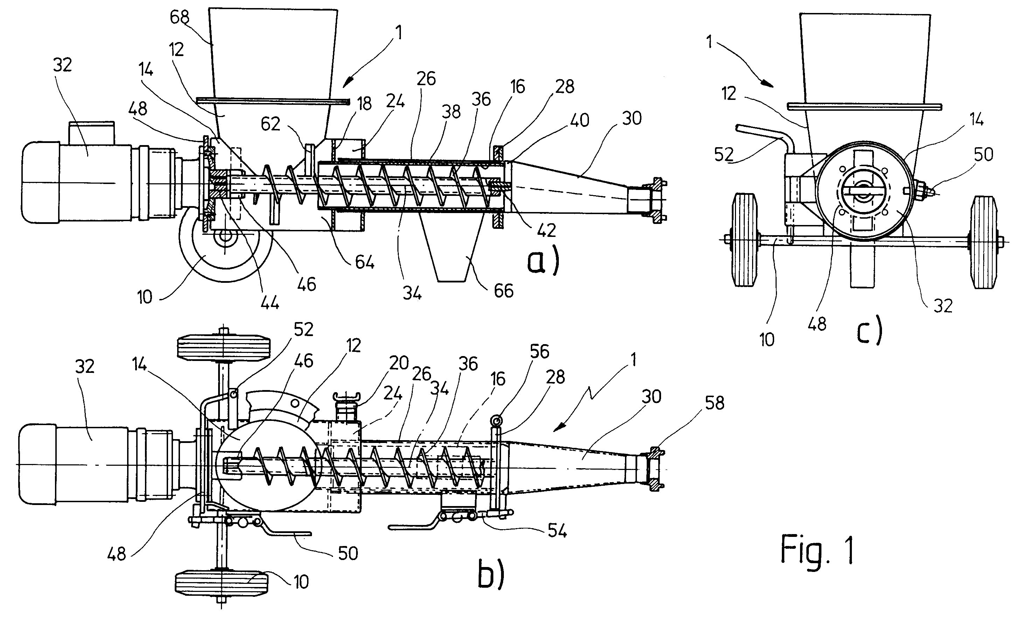

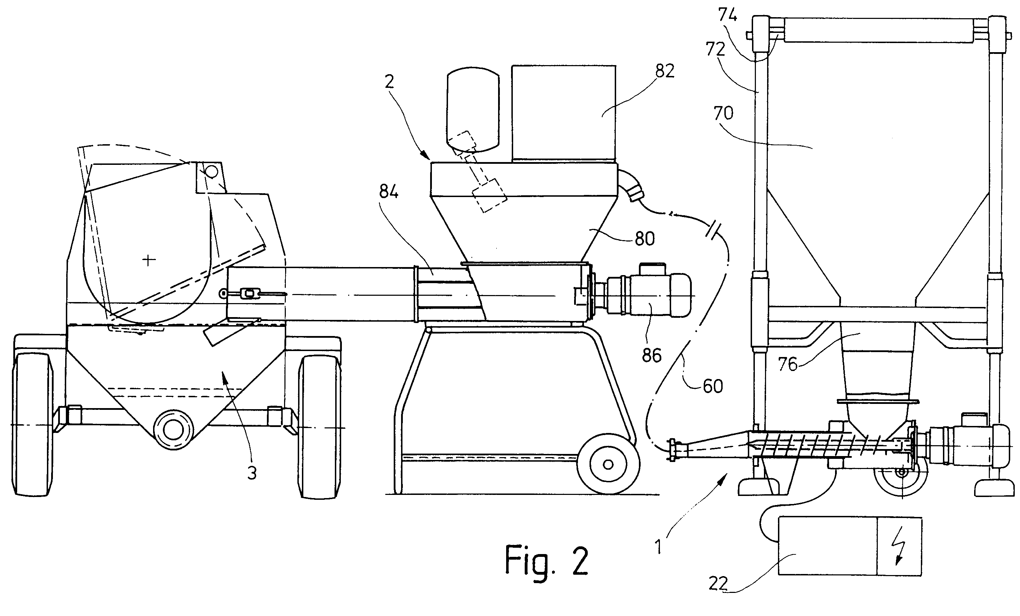

Der in Fig. 1a bis d dargestellte Trockenmörtelförderer 1 besteht im wesentlichen aus einem auf einem einachsigen Fahrgestell 10 angeordneten von oben her über einen nach oben offenen Fülltrichter 12 mit Fördergut befüllbaren Beschickungsbehälter 14, einem an den Beschickungsbehälter 14 angeschlossenen, nach dem Inneren des Beschickungsbehälters offenen Dosierrohr 16, einer durch eine Trennwand 18 vom Beschickungsbehälter abgetrennten, vom Dosierrohr 16 durchdrungenen, über einen Luftanschluß 20 mit einem Kompressor 22 (Fig. 2) verbindbaren Luftverteilerkammer 24, einem das Dosierrohr 16 konzentrisch umhüllenden, zur Luftverteilerkammer 24 hin offenen Hüllrohr 26, einem an das Hüllrohr 26 fluchtend über eine Flanschverbindung 28 angeschlossenen konischen Injektionsrohr 30 und einer den Beschickungsbehälter 14 und das Dosierrohr 16 durchdringenden, durch einen externen Antriebsmotor 32 um seine Achse 34 antreibbaren Dosierschnecke 36. Das Hüllrohr 36 bildet zusammen mit dem Dosierrohr 16 einen Ringkanal 38, der über eine das Dosierrohr 16 umfassende Ringdüse 40 gemeinsam mit dem Dosierrohr 16 in das Injektionsrohr 30 mündet.

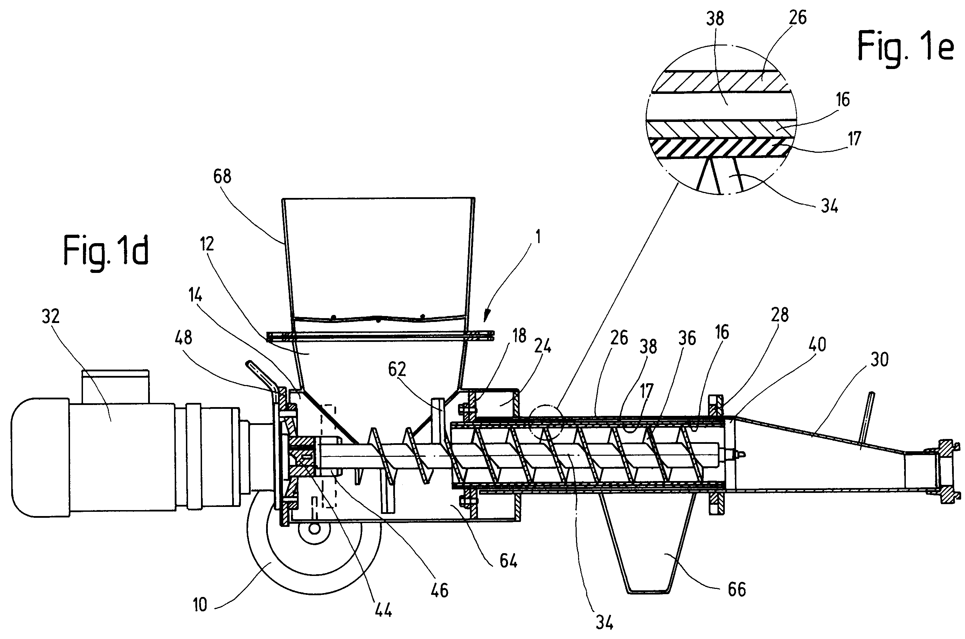

Bei dem in Fig. 1d und e gezeigten, gegenüber Fig. 1a abgewandelten Ausführungsbeispiel trägt das Dosierrohr 26 innenseitig eine Schicht 17 aus einem verschleißfesten, elastomeren Material, gegen deren Innenfläche die Dosierschnecke 36 radial dichtend anliegt. Dadurch kann der Spalt zwischen der Dosierschnecke und dem Dosierrohr auf Null gesetzt werden, so daß eine hervorragende Abdichtung gegen Luftdurchtritt vom Injektor 30 zum Beschickungsbehälter 14 eintritt. Die Wandstärke der elastomeren Schicht 17 sollte mindestens der Korngröße des zu transportierenden Materials entsprechen, so daß keine Blockierung der Dosierschnecke im Dosierrohr eintreten kann.

Zur Lagerung der Dosierschnecke 36 sind auf der Seite des Injektionsrohrs ein in das Dosierrohr 16 achszentral eingreifender Steckzapfen 42 und an der Abtriebswelle 44 des Motors 32 eine Klauenkupplung 46 vorgesehen. Der Antriebsmotor 32 ist an einem Flanschdeckel 48 angeordnet, der über einen Schnellverschluß 50 und ein Gelenk 52 unter Lösen der Klauenkupplung 46 von der Dosierschnecke 36 gegenüber dem Beschickungsbehätler 14 verschwenkbar angeordnet ist. Dadurch kann die Dosierschnecke 36 mit wenigen Handgriffen beispielsweise zu Reinigungszwecken aus dem Beschickungsbehälter 14 und dem Dosierrohr 16 herausgezogen werden. Die Dosierschnecke 36 ist zusätzlich mit radial überstehenden Rührflügeln 62 bestückt, mit denen das in die Auflockerungszone 64 des Beschickungsbehälters gelangende Fördergut für den Weitertransport in das Dosierrohr 16 aufgelockert wird. Auf der anderen Seite kann auch das Injektionsrohr 30 mittels eines Schnellverschlusses 54 mit einem Handgriff vom Hüllrohr 26 und Dosierrohr 16 gelöst und um die Achse 56 zu Reinigungszwecken von diesen weggeschwenkt werden. An seinem freien Ende trägt das Injektionsrohr 30 einen Kupplungsring 58 für den Anschluß eines Förderschlauchs 60.

Ein am Hüllrohr 26 nach unten überstehendes Stützbein 66 sorgt dafür, daß der Trockenmörtelförderer 1 auf dem Fußboden abgestützt und mit seinem Dosierrohr 16 im wesentlichen horizontal ausgerichtet werden kann.

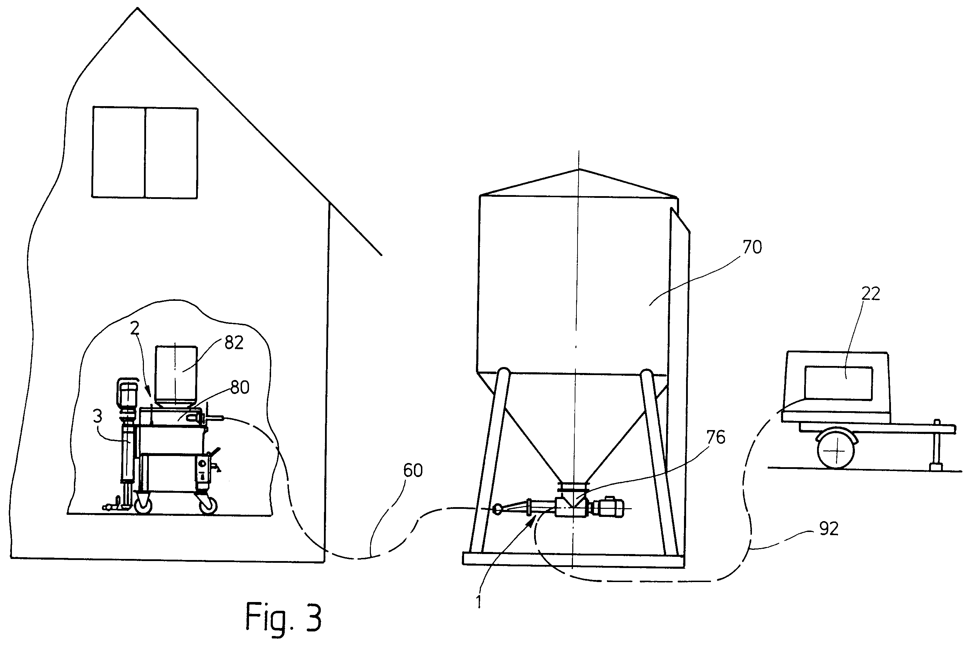

Der Fülltrichter 12 weist an seinem Oberrand einen Flansch 68 auf, an den ein geeignetes Adapterstück 68 für den Anschluß an einen Vorratsbehälter 70 anflanschbar ist. Bei dem in Fig. 2 gezeigten Ausführungsbeispiel ist der Trockenmörtelförderer 1 an einen als Big-Bag ausgebildeten Vorratsbehälter 70 angeschlossen, der an einem Traggestell 72 mittels Querstangen 74 aufgehängt und mit seiner nach unten weisenden Auslaßöffnung 76 staubdicht auf das Adapterstück 68 aufgesteckt ist, während er bei dem Ausführungsbeispiel nach Fig. 3 an die Auslaßöffnung 76 eines als Mörtelsilo ausgebildeten Vorratsbehälters 70 angeflanscht ist. Der Trockenmörtelförderer 1 wird über den Kompressor 22 und den Druckschlauch 92 mit der Transportluft versorgt.

Austrittsseitig ist der Trockenmörtelförderer 1 über den Förderschlauch 60, der einige 10 m lang sein kann, an eine Putzmaschine angeschlossen, die aus einem Mörtelmischer 2 und einer Dickstoffpumpe 2 modular zusammengesetzt ist. Bei Vorhandensein einer Rückschlagklappe im Anschlußbereich zwischen Vorratsbehälter 70 und Fülltrichter 12 können auch Förderlängen von mehreren 100 m erreicht werden. Der Mörtelmischer 2 weist einen Abscheidebehälter 80 für das über den Förderschlauch 60 ankommende Fördergut auf, der über einen Luftfilter 82 für die ankommende Transportluft mit der Umgebungsluft verbunden ist und an seiner Unterseite an eine Mischstrecke 84 angeschlossen ist, in der der Trockenmörtel mit Wasser gemischt und als Naßmörtel mit Hilfe des Motors 86 dem Pumpaggregat 3 zur Weiterförderung an die Verarbeitungsstelle zugeführt wird.

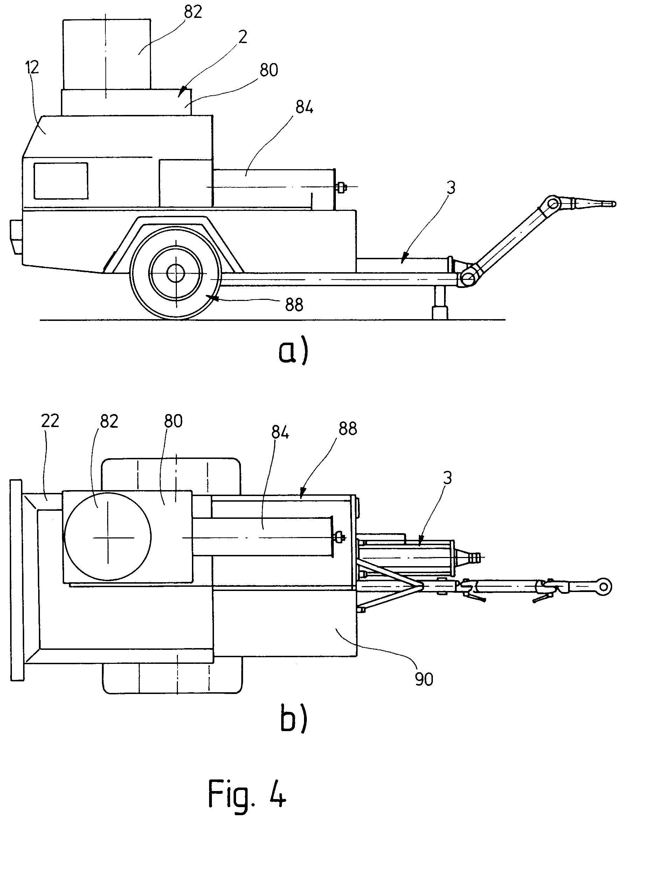

Die Fig. 4a und b zeigen ein fahrbares Kompaktsystem, bei welchem für Transportzwecke die in Fig. 2 oder 3 gezeigten Aggregate, der Kompressor 22, der Mörtelmischer 2 und die Mörtelpumpe 3 auf einem gemeinsamen Fahrgestell 88 zusammengefaßt sind. Außerdem ist dort ein Stauraum 90 für den Trockenmörtelförderer 1 vorgesehen. Dieser wird an der Baustelle zu einem stationären Vorratsbehälter 70 verbracht und mit Versorgungs- und Schlauchleitungen mit dem Kompressor und dem Mörtelmischer verbunden.

Zusammenfassend ist folgendes festzustellen: Die Erfindung bezieht sich auf einen pneumatischen Trockenmörtelförderer zur kontinuierlichen Mörtelversorgung von Mischpumpen oder Putzmaschinen an Baustellen. Der Trockenmörtelförderer 1 besteht im wesentlichen aus einem an einen Vorratsbehälter 70 anschließbaren Beschickungsbehälter 14 mit einer Auflockerungszone 64 für das Fördergut sowie einer mit dem aufgelockerten Fördergut beschickbaren und mit Druckluft beaufschlagbaren, gegenüber den Vorrats- und Beschickungsbehältern 14,70 abgedichteten, über eine Förderleitung 60 mit einem Abscheidebehälter 80 für das Fördergut verbindbaren Injektionszone 30. Um einen kontinuierlichen und entmischungsfreien Transport von Trockenmörtelgemischen mit Bestandteilen unterschiedlicher Körnung und verschiedenen Schüttgewichts zu ermöglichen, wird gemäß der Erfindung vorgeschlagen, daß in den Beschickungsbehälter 14 eine kontinuierlich arbeitende Dosierschnecke 36 einer an den Beschickungsbehälter angeschlossenen Dosier- und Dichtstrecke 16 eingreift, daß die Dosier- und Dichtstrecke 16 austrittsseitig von einer mit Druckluft beaufschlagten, in die als in Richtung Auslaßöffnung 58 konisch verjüngter Rohrabschnitt 30 ausgebildete Injektionszone mündenden Ringdüse 40 umschlossen ist, und daß das Dosierrohr 16 unter Bildung eines an seinem einen Ende mit der Druckluft beaufschlagbaren und an seinem anderen Ende die Ringdüse 40 bildenden Ringkanals 38 doppelwandig ausgebildet ist.

## Patentansprüche

1. Vorrichtung zur pneumatischen Förderung von pulverförmigem und/oder körnigem trockenem Fördergut mit einem Vorratsbehälter (70), einem dem Vorratsbehälter drucklos nachgeordneten, eine Auflockerungszone (64) für das Fördergut enthaltenden Beschickungsbehälter (14), einem an den Beschickungsbehälter (14) angeschlossenen Dosierrohr (16), einer motorisch angetriebenen, in den Beschickungsbehälter (14) eingreifenden und mit mehreren Windungen durch das Dosierrohr (16) hindurchgreifenden Dosierschnecke (36), einem austrittsseitig an das Dosierrohr angeschlossenen, über eine Ringdüse (40) mit Druckluft beaufschlagbaren, gegenüber dem Beschickungsbehälter (14) über das Dosierrohr (16) abgedichteten, über eine Auslaßöffnung (58) und eine an diese angeschlossene Förderleitung (60) mit einem Abscheidebehälter für das Fördergut verbindbaren, konisch in Richtung Auslaßöffnung (58) verjüngten Injektorrohr (30), **dadurch gekennzeichnet**, daß das Dosierrohr (16) unter Bildung eines an seinem einen Ende mit der Druckluft beaufschlagbaren und an seinem anderen Ende die Ringdüse (40) bildenden Ringkanals (38) doppelwandig ausgebildet ist.

2. Vorrichtung nach Anspruch 1, **gekennzeichnet durch** eine vom Dosierrohr (16) durchdrungene, über einen Luftanschluß (20) mit der Druckluft beaufschlagbare Luftverteilerkammer (24) und ein das Dosierrohr (16) konzentrisch umhüllendes, an seinem einen Ende zur Luftverteilerkammer (24) hin offenes, den Ringkanal (38) außenseitig begrenzendes Hüllrohr (26).

3. Vorrichtung nach Anspruch 1 oder 2, **dadurch gekennzeichnet**, daß das Injektorrohr (30) fluchtend an das Hüllrohr (26) angeschlossen ist.

4. Vorrichtung nach einem der Ansprüche 1 bis 3, **dadurch gekennzeichnet**, daß die Luftverteilerkammer (24) durch eine Trennwand (18) gegenüber dem Beschickungsbehälter (14) abgetrennt ist.

5. Vorrichtung nach einem der Ansprüche 1 bis 4, **dadurch gekennzeichnet**, daß die Schneckenwindungen der Dosierschnecke (36) auf einer Achswelle mit in Förderrichtung zunehmendem Durchmesser angeordnet sind.

6. Vorrichtung nach einem der Ansprüche 1 bis 5, **dadurch gekennzeichnet**, daß die Schneckenwindungen der Dosierschnecke (36) eine in Förderrichtung stufenweise oder kontinuierlich abnehmende Ganghöhe aufweisen.

7. Vorrichtung nach einem der Ansprüche 1 bis 6**, dadurch gekennzeichnet**, daß die Dosierschnecke (36) doppelgängig ist.

8. Vorrichtung nach einem der Ansprüche 1 bis 7, **dadurch gekennzeichnet**, daß die Dosierschnecke (36) und das Dosierrohr (16) einen in Förderrichtung abnehmenden Durchmesser aufweisen.

9. Vorrichtung nach einem der Ansprüche 1 bis 8, **dadurch gekennzeichnet**, daß der Beschickungsbehälter (14) ein Rührwerk (62) für das Fördergut enthält.

10. Vorrichtung nach Anspruch 9, **dadurch gekennzeichnet**, daß das Rührwerk durch am Dosierorgan (36) angeordnete, im wesentlichen radial über dessen Achswelle überstehende Rührflügel (62) gebildet ist.

11. Vorrichtung nach einem der Ansprüche 1 bis 10, **dadurch gekennzeichnet**, daß das Dosierorgan (36) den Beschickungsbehälter (14) und das Dosierrohr (16) im wesentlichen horizontal durchgreift.

12. Vorrichtung nach einem der Ansprüche 1 bis 11, **dadurch gekennzeichnet**, daß das Dosierorgan (36) sich zwischen einem im Übergangsbereich zwischen Dosierrohr (16) und Injektionsrohr (30) zentral angeordneten Steckzapfen (42) und einem in den Beschickungsbehälter (14) eingreifenden motorseitigen Kupplungsorgan (46) erstreckt.

13. Vorrichtung nach einem der Ansprüche 1 bis 12, **dadurch gekennzeichnet**, daß das Dosierrohr (16) innenseitig eine Elastomerschicht trägt und daß die Dosierschnecke (36) an ihrem Außendurchmesser zumindest partiell gegen die Elastomerschicht dichtend anliegt oder in diese radial eindringt.

14. Vorrichtung zur pneumatischen Förderung von pulverförmigem und/oder körnigem trockenem Fördergut mit einem Vorratsbehälter (70), einem dem Vorratsbehälter drucklos nachgeordneten, eine Auflockerungszone (64) für das Fördergut enthaltenden Beschickungsbehälter (14), einem an den Beschickungsbehälter (14) angeschlossenen Dosierrohr (16), einer motorisch angetriebenen, in den Beschickungsbehälter (14) eingreifenden und mit mehreren Windungen durch das Dosierrohr (16) hindurchgreifenden Dosierschnecke (36), einem austrittsseitig an das Dosierrohr angeschlossenen, über eine Ringdüse (40) mit Druckluft beaufschlagbaren, gegenüber dem Beschickungsbehälter (14) über das Dosierrohr (16) abgedichteten, über eine Auslaßöffnung (58) und eine in diese angeschlossene Förderleitung (60) mit einem Abscheidebehälter für das Fördergut verbindbaren, konisch in Richtung Auslaßöffnung (58) verjüngten Injektorrohr (30), **dadurch gekennzeichnet**, daß das Dosierrohr (16) innenseitig eine Elastomerschicht (17) trägt und daß die Dosierschnecke (36) an ihrem Außendurchmesser zumindest partiell gegen die Elastomerschicht dichtend anliegt oder in diese radial eindringt.

15. Vorrichtung nach Anspruch 13 oder 14, **dadurch gekennzeichnet**, daß die Elastomerschicht (17) eine Wandstärke von 3 mm bis 10 mm aufweist.

16. Vorrichtung nach einem der Ansprüche 1 bis 15, **dadurch gekennzeichnet**, daß der Beschickungsbehälter (14) mit einem Anschlußadapter (68) für einen vorzugsweise als an einem Traggestell (72) mit nach unten weisender Auslaßöffnung (76) aufgehängten Big-Bag ausgebildeten Vorratsbehälter (70) bestückbar ist.

17. Vorrichtung nach einem der Ansprüche 1 bis 16, **dadurch gekennzeichnet**, daß der Beschickungsbehälter (14) ein vorzugsweise einachsiges Fahrgestell (72) aufweist.

18. Vorrichtung nach einem Anspruch 12, **dadurch gekennzeichnet**, daß am Dosierrohr (16) ein zur Seite des Fahrgestells (72) überstehendes Stützbein (66) angeordnet ist.

19. Förder- und Mischanlage für pulverförmiges oder körniges Mischgut, **gekennzeichnet durch** ein gemeinsames Fahrgestell (88) zur Aufnahme einer Versorgungseinheit mit Antriebsaggregat und Kompressor (22), einer Fördervorrichtung (1) mit Beschickungsbehälter (14), Dosier- und Dichtrohr (16,36) und Injektionsrohr (30) nach einem der Ansprüche 1 bis 18 und einem vorzugsweise an einer als Putzmaschine ausgebildeten Mischpumpe (2,3) vorgesehenen Abscheidebehälter (80) für das Fördergut, wobei die Fördervorrichtung (1) und gegebenenfalls auch die Mischpumpe im Gebrauchszustand vom gemeinsamen Fahrgestell (88) abnehmbar, im Abstand voneinander aufstellbar und über Versorgungs- und Förderleitungen miteinander verbindbar sind.
